(19) **Europäisches Patentamt / European Patent Office / Office européen des brevets**

(11) **EP 4 772 827 A1**

(12) # EUROPEAN PATENT APPLICATION
published in accordance with Art. 153(4) EPC

(43) Date of publication:
**08.07.2026 Bulletin 2026/28**

(21) Application number: **24860529.7**

(22) Date of filing: **29.08.2024**

(51) International Patent Classification (IPC):
**G01B 9/0209** (2022.01)  **G01B 9/02** (2022.01)
**G01B 11/06** (2006.01)  **G01B 11/24** (2006.01)

(52) Cooperative Patent Classification (CPC):
**G01B 9/02; G01B 9/0209; G01B 11/06; G01B 11/24**

(86) International application number:
**PCT/KR2024/096084**

(87) International publication number:
**WO 2025/048613 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **01.09.2023  KR 20230115956
27.08.2024  KR 20240115360**

(71) Applicant: **Park Systems Corp.
Yeongtong-gu
Suwon-si, Gyeonggi-do 16229 (KR)**

(72) Inventors:
• **JO, Ahjin
Seoul 06204 (KR)**
• **AHN, Byoung-Woon
Anyang-si Gyeonggi-do 14045 (KR)**
• **KIM, Hyuntae
Suwon-si Gyeonggi-do 16240 (KR)**
• **PARK, Sang-Il
Seongnam-si Gyeonggi-do 13540 (KR)**

(74) Representative: **Müller Schupfner & Partner
Patent- und Rechtsanwaltspartnerschaft mbB
(Muc)
Bavariaring 11
80336 München (DE)**

(54) **INSTANTANEOUS WHITE LIGHT INTERFEROMETER AND METHOD OF WHITE LIGHT INTERFEROMETER FOR CAPTURING INSTANTANEOUS WHITE LIGHT INTERFERENCE PATTERN IMAGES**

(57)  Disclosed are an instantaneous white light interferometer and a method of the white light interferometer for capturing instantaneous white light interference pattern images. The instantaneous white light interferometer captures an interference pattern generated by a reflection beam reflected from a mirror and a measurement beam reflected from a sample via a scanning assembly tilted at a predetermined angle with respect to the sample, so as to obtain the shape of the sample, and extracts a Z value at a zero-crossing point by analyzing white light interference pattern signals, receives the reflection beam and the measurement beam from the scanning assembly maintained at a position corresponding to the Z value, and generates and merges a plurality of interference pattern images to obtain a surface shape image of the sample.

EP 4 772 827 A1

FIG. 1

## Description

[Technical Field]

The present invention relates to an instantaneous white light interferometer and a method of white light interferometer for capturing instantaneous white light interference pattern images, and particularly to an instantaneous white light interferometer capable of continuously capturing the surface of a sample and a method of white light interferometer for capturing instantaneous white light interference pattern images.

[Background Art]

In recent fields of nanoscience, semiconductors, nanophysics, nanochemistry, nanomaterials, nanooptics, surface science, medical imaging, biology, biophysics, medical physics, or biomedical optics, there is a growing demand to measure three-dimensional shape information of samples with a three-dimensional nanostructures or micrometer structures.

A white light interferometry that uses interference phenomenon of white light has been used to measure the three-dimensional shape information of the sample.

A general white light interferometry uses a beam splitter that separates a white light source and generates a path toward the sample and the mirror, respectively. The white light irradiated to the sample and the mirror, respectively by the beam splitter is reflected and then recombined and transmitted to the CCD (charge-coupled device) image sensor, which captures interference pattern images by the combined light reflected from the sample and the mirror, respectively. The image analysis processor analyzes the interference pattern image captured by the CCD image sensor to generate 3D shape information of the sample.

At this time, the sample is placed on the stage, and the stage is moved along the path axis (generally the Z-axis) of the light source by a separate driving assembly to generate a path difference between the sample side and the mirror side. The interference pattern image captured by the CCD image sensor forms different interference pattern images according to a change in the path difference between the sample side and the mirror side, and the image analysis processor generates three-dimensional shape information of the sample based on the interference patterns from which the different interference pattern images are accumulated.

The white light interferometer uses a so-called vertical scanning interferometry in which an interference pattern is obtained according to a change in the Z-axis distance between a stage on which a sample is placed and an optical system such as the beam splitter and the CCD image sensor. In the vertical scanning interferometry, Z-axis distance between a stage and an optical system is changed at a specific position on the sample to obtain interference pattern of one frame, the sample or the optical system is shifted to an X-axis by a certain distance, and then the Z-axis distance between the stage and the optical system is changed again to obtain an interference pattern of another adjacent frame, and the obtained plural interference patterns are accumulated or stitched to scan the sample.

However, the above-described vertical scanning interferometry has a problem in that it takes a long time to scan the shape of the sample because it requires obtaining an interference pattern by changing the Z-axis distance between the stage and the optical system at each specific location, and then obtaining an interference pattern by changing the Z-axis distance between the stage and the optical system after the sample or the optical system moves along the X-axis.

[Disclosure]

[Technical Problem]

An object of the present invention for solving the above-described problems is to provide an instantaneous white light interferometer capable of obtaining the shape of a sample at a more improved speed by continuously capturing the surface of the sample, and a method of the white light interferometer for capturing instantaneous white light interference pattern images.

[Technical Solution]

To achieve the object, an instantaneous white light interferometer according to an embodiment of the present invention is an instantaneous white light interferometry (WLI) that obtains the shape of a sample by capturing an interference pattern generated by a measurement beam reflected from the sample and a reflection beam reflected from a mirror via a scanning assembly tilted at a predetermined angle with respect to the sample, and the white light interferometer includes a light source providing white light, a stage on which a sample is placed, a mirror having a reflective surface, a beam splitter splitting a path of white light provided from the light source into the sample side and the mirror side, a stage movement assembly moving the stage in an X-axis direction in which the sample is scanned, an optical movement assembly moving the scanning assembly in a Z-axis direction toward the sample, and CCD (Charge Coupled Device) image sensor receiving the measurement beam and the reflection beam and capturing an interference pattern generated by the measurement beam and the reflection beam, and an image analysis processor generating a white light interference pattern signal (WLI fringe) based on the interference pattern, wherein the image analysis processor extracts a Z value at a zero-crossing point where the intensity of light changes rapidly, by analyzing the white light interference pattern signal, wherein the optical movement assembly moves the scanning assembly from the surface of the sample to a position corresponding to the Z value based on the Z value, and wherein the stage movement assembly moves the stage in the X-axis direction after the scanning assembly moves to a position corresponding to the Z value, and wherein the CCD image sensor generates a plurality of interference pattern images by receiving the measurement beam and the reflection beam from the scanning assembly maintained at a position corresponding to the Z value while the stage movement assembly moves the stage, and wherein the image analysis processor obtains a surface shape image of the sample by merging the plurality of interference pattern images.

The optical movement assembly fluctuates the position of the scanning assembly so that the distance between the scanning assembly and the surface of the sample maintains the Z value when the stage is moved in the X-axis direction.

The zero-crossing point is characterized in that it is a negative zero-crossing point present in a region in which the intensity decreases as the Z value increases.

The Z value exists within a region in which the white light interference pattern signal and the height of the sample surface coincide with each other linearly.

The Z value is characterized in the range of -30 nm to +30 nm.

The image analysis processor is characterized by calculating the step of the sample based on the intensity of light at the zero-crossing point using Equation 1 below.

$$\Delta h = \frac{I - I_0}{s}$$

<Equation 1>

(wherein $\triangle h$ is the step of the sample, I is the intensity of light of the pixel in the image captured at the zero-crossing point, $I_0$ is the reference intensity, and s is the constant)

The scanning assembly tilted at a predetermined angle with respect to the sample is tilted at the predetermined angle so that the entire interference pattern image is included in the same interference pattern.

To achieve the object, an instantaneous white light interferometer according to an embodiment of the present invention is an instantaneous white light interferometry (WLI) that obtains the shape of a sample by capturing an interference pattern generated by a measurement beam reflected from the sample and a reflection beam reflected from a mirror via a scanning assembly tilted at a predetermined angle with respect to the sample, and the white light interferometer includes a light source providing white light, a stage on which a sample is placed, a mirror having a reflective surface, a beam splitter splitting a path of white light provided from the light source into the sample side and the mirror side, an optical movement assembly moving the scanning assembly in an X-axis direction, in which the sample is scanned, and toward the sample in a Z-axis direction, and CCD (Charge Coupled Device) image sensor receiving the measurement beam and the reflection beam and capturing an interference pattern generated by the measurement beam and the reflection beam, and an image analysis processor generating a white light interference pattern signal (WLI fringe) based on the interference pattern, wherein the image analysis processor extracts a Z value at a zero-crossing point where the intensity of light changes rapidly, by analyzing the white light interference pattern signal, wherein the optical movement assembly, after moving the scanning assembly from the surface of the sample to a position corresponding to the Z value based on the Z value moves the scanning assembly in the X-axis direction while maintaining the scanning assembly at the position corresponding to the Z value with respect to the surface of the sample, and wherein the CCD image sensor generates a plurality of interference pattern images by receiving the measurement beam and the reflection beam from the scanning assembly while the optical movement assembly moves the scanning assembly in X-axis, and wherein the image analysis processor merges the plurality of interference pattern images to obtain a surface shape image of the sample.

To achieve the object, an instantaneous white light interference pattern image capturing method of a white light interferometer, according to an embodiment of the present invention, is the instantaneous white light interference pattern image capturing method of the white light interferometer, wherein the method comprises: generating a white light interference pattern signal based on an interference pattern generated by a measurement beam reflected from a sample and a reflection beam reflected from a mirror via a scanning assembly tilted at a predetermined angle with respect to the sample; extracting a Z value at a zero-crossing point where the intensity of light changes rapidly, by analyzing the white light interference pattern signal by an image analysis processor; moving the scanning assembly based on the Z value, from the surface of the sample to a position corresponding to the Z value, by an optical movement assembly; moving a stage on which the sample is placed, in the X-axis direction, by a stage movement assembly; generating a plurality of interference pattern images by receiving the measurement beam and the reflection beam from the scanning assembly, by a CCD image sensor; and obtaining a surface shape image of the sample by merging the plurality of interference pattern images, by the image analysis processor.

It is characterized that in extracting the Z value at the zero-crossing point where the light intensity changes rapidly, by analyzing the white light interference pattern signal by the image analysis processor, the zero-crossing point is the negative zero-crossing point present in the region where the intensity decreases as the Z value increases.

In moving the stage on which the sample is placed in the X-axis direction by the stage movement assembly, the optical movement assembly fluctuates the position of the scanning assembly so that the distance between the scanning assembly and the surface of the sample maintains the Z value.

[Advantageous Effects]

According to an instantaneous white light interferometer and a method of capturing an instantaneous white light interference pattern image of the white light interferometer of the present invention, a scanning assembly tilted at a predetermined angle with respect to a sample is located at a zero-crossing point and then the surface of the sample is continuously captured to obtain the shape of the sample at a further improved speed.

[Description of Drawings]

FIG. 1 is a diagram illustrating an embodiment of an instantaneous white light interferometer, according to the present invention.

FIG. 2 is a diagram illustrating another embodiment of an instantaneous white light interferometer, according to the present invention.

FIG. 3 is a view showing a sample surface shape image obtained from a conventional white light interferometer and a sample surface shape image obtained from a white light interferometer, according to the present invention.

FIG. 4 is a view for exemplifying a negative zero-crossing point, according to the present invention.

FIG. 5 is a view for exemplifying a position where a Z value of a zero-crossing point exists, according to the present invention.

FIG. 6 is a view for exemplifying the degree to which the scanning assembly is tilted with respect to a sample, according to the present invention.

FIG. 7 is a view for exemplifying the saturation phenomenon of WLI Intensity according to the tilt degree of a scanning assembly.

FIG. 8 is a diagram illustrating a conventional white light interferometry and a white light interferometry, according to the present invention.

FIG. 9 is a diagram illustrating a state in which the scanning assembly slides a surface of a sample, according to the present invention.

FIG. 10 is a diagram illustrating a state of a sample including a transparent film.

FIG. 11 is a diagram illustrating a state in which a scanning assembly measures the surface brightness of a sample by moving across the surface of the sample in a single path, according to the present invention.

FIGS. 12 and 13 are flowcharts illustrating a method of a white light interferometer for capturing an instantaneous white light interference pattern image, according to the present invention.

[Best Mode]

Hereinafter, some embodiments of the present invention will be described in detail with reference to exemplary drawings. In assigning reference numbers to the components of each drawing, it should be noted that the same components are made to have the same sign as much as possible, even if they are displayed on different drawings.

Further, in describing the embodiment of the present invention, a detailed description of known constructions or functions is omitted if it is determined that the detailed description of known constructions or functions hinders understanding of the embodiment of the present invention.

In addition, in describing the components of the embodiments of the present invention, terms such as first, second, A, B, (a), (b), and the like may be used. These terms are used only to distinguish a component from other components, and the nature, sequence, or order of the component is not limited by the terms.

In the present specification, the singular-type also includes the plural-type unless otherwise specified in the phrase. The "includes" and/or "including" used in the specification does not exclude the presence or addition of one or more other components other than the mentioned components.

Hereinafter, the present invention will be described in more detail with reference to the accompanying drawings.

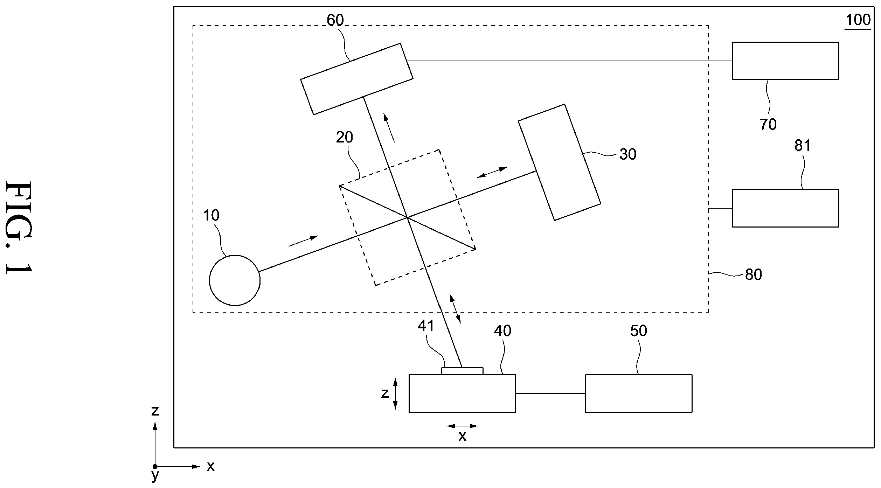

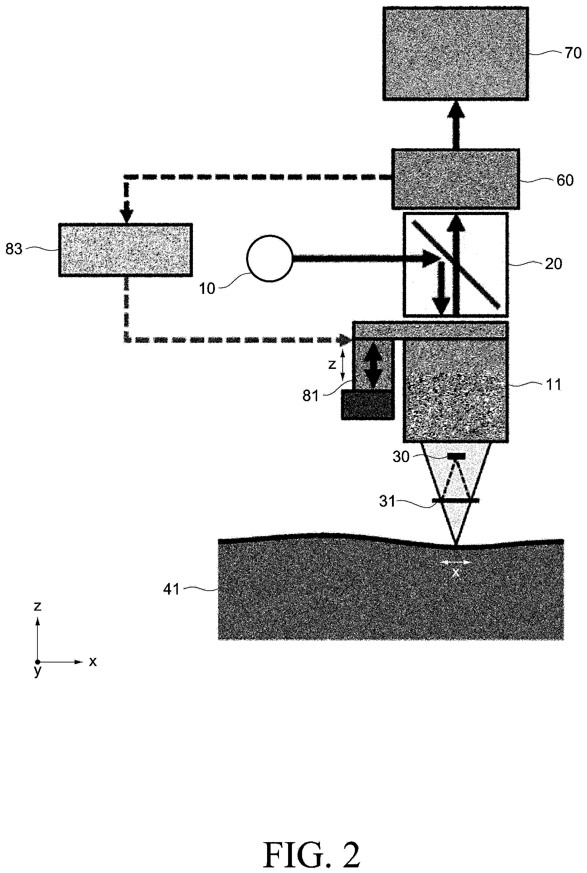

FIG. 1 is a diagram illustrating an embodiment of an instantaneous white light interferometer 100, according to the present invention, and FIG. 2 is a diagram illustrating another embodiment of an instantaneous white light interferometer 100, according to the present invention. In detail, FIG. 1 illustrates an embodiment of an instantaneous white light interferometer 100 as a Michelson-type interferometer, and FIG. 2 illustrates another embodiment of an instantaneous white light interferometer 100 as a Mirau-type interferometer, according to the present invention.

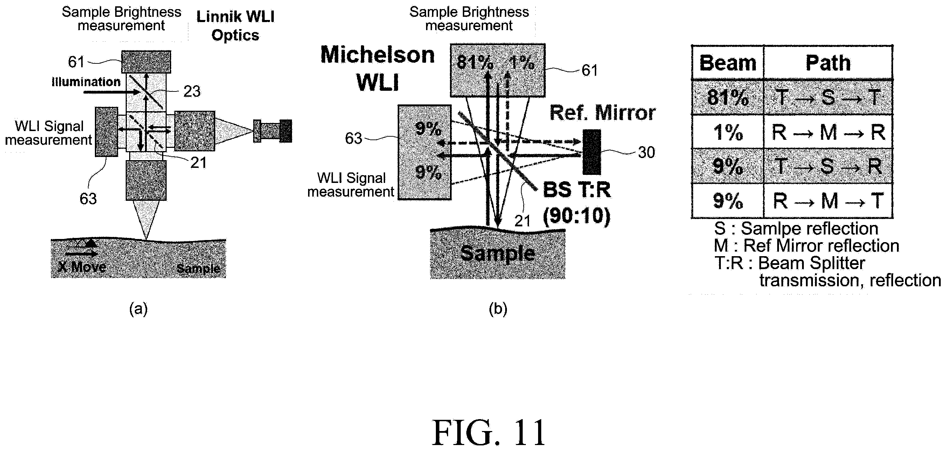

The instantaneous white light interferometer 100 (hereinafter, referred to as "white light interferometer 100"), according to the present invention, may be applied as a Michelson-type interferometer and a Mirau-type interferometer depending on the arrangement of each component, etc., as shown in FIGS. 1 and 2. Alternatively, as shown in (a) of FIG. 11, it may be applied as a Linnik-type interferometer.

A white light interferometry (WLI), according to the present invention, includes a light source 10, a beam splitter 20, a mirror 30, a stage 40, a stage movement assembly 50, a CCD image sensor 60, and an image analysis processor 70. In addition, the white light interferometer 100, according to the present invention, may further include an optical movement assembly 81 for moving the scanning assembly 80. Here, the scanning assembly 80 includes the light source 10, the beam splitter 20, the mirror 30, and the CCD image sensor 60. The optical movement assembly 81 includes a z scanner 82 (z-scanner) for tracking and scanning the height and position of the scanning assembly 80 relative to the sample 41, and a z servo 83 (z-servo) for controlling the height and position of the scanning assembly 80 relative to the sample 41. The optical movement assembly 81 may move the scanning assembly 80 toward the sample 41 in the Z-axis direction. The optical movement assembly 81 may change the path length of white light toward the sample 41 by moving the scanning assembly 80 in the Z-axis direction. As the optical movement assembly 81 moves the scanning assembly 80 in the Z-axis direction, a path difference between the measurement beam and the reflection beam is generated.

The white light interferometer 100, according to the present invention, may further include a separate lens (not shown) for focusing and controlling the path of the white light, measurement beam, and reflection beam, respectively, on the light source 10 side, the sample 41 side, the mirror 30 side, and the CCD image sensor 60 side, centering on the beam splitter 20.

A white light interferometer 100, according to the present invention, obtains the shape of a sample 41 by capturing an interference pattern generated by the measurement beam reflected from the sample 41 and the reflection beam reflected from a mirror 30 via a scanning assembly 80 tilted at a predetermined angle with respect to the sample 41. The white light interferometer 100, according to the present invention, continuously captures the interference patterns generated by the measurement beam reflected from the sample 41 and the reflection beam reflected from the mirror 30 via a scanning assembly 80 tilted at the predetermined angle with respect to the sample 41 to analyze the shape information of the sample 41, specifically the surface height and step of the sample 41.

The scanning assembly 80 may be tilted at the predetermined angle with respect to the sample 41 by the optical movement assembly 81. Alternatively, the stage 40 may be tilted at the predetermined angle by the stage movement assembly 50. The optical movement assembly 81 provides Z-axis directional movement of the scanning assembly 80. The stage movement assembly 50 provides an X-axis directional movement of the stage 40. When the stage movement assembly 50 moves the stage 40 in the X-axis direction, the optical movement assembly 81 may tilt only the lens disposed between the beam splitter 20 and the sample 41 side by a predetermined angle.

The scanning assembly 80 may be tilted at the predetermined angle with respect to the sample 41, or the stage 40 may be tilted at the predetermined angle with respect to the scanning assembly 80. At this time, the direction in which the scanning assembly 80 or the stage 40 is tilted may be tilted in the X-axis direction as illustrated in FIG. 2, but is not limited thereto and may be tilted in the Y-axis direction or may be tilted in the xy plane.

The light source 10 generates white light. The light source 10 may be a halogen lamp or a white LED that generates white light. The light source 10 provides white light to the beam splitter 20, and the beam splitter 20 splits the white light provided from the light source 10 and provides it to the sample 41 and the mirror 30.

The sample 41 is placed on the upper surface of the stage 40. The sample 41 is a measurement object to be measured for surface information. The sample 41 may be a nanostructure, such as a semiconductor device.

The stage movement assembly 50 moves the stage 40. The stage movement assembly 50 moves the stage 40 in the X-axis direction, in which the sample 41 is scanned or to be scanned, while maintaining a predetermined angle between the path of white light provided from the beam splitter 20 to the sample 41.

The mirror 30 has a reflective surface on one surface facing the beam splitter 20.

The beam splitter 20 splits the path of white light provided from the light source 10 into a sample 41 side and a mirror 30 side. The beam splitter 20 directs a portion of the white light provided from the light source 10 to the stage 40 side.

The beam splitter 20 provides the mirror 30 with the remaining white light provided from the light source 10. The white light provided to the mirror 30 is reflected and transmitted back to the beam splitter 20. The beam splitter 20 changes the path of the reflection beam so that the reflection beam reflected from the mirror 30 is transmitted to the CCD image sensor 60.

The beam splitter 20 splits white light into a sample 41 side and a reflective surface side of the mirror 30. The measurement beam reflected from the sample 41 and the reflection beam reflected from the mirror 30 are transmitted to the CCD image sensor 60 by the beam splitter 20. The CCD image sensor 60 receives an interference pattern caused by a change in the path difference of the measurement beam reflected from the sample 41 and the reflection beam reflected from the mirror 30.

The beam splitter 20 changes the path of the white light so that some of the white light provided from the light source 10 is transmitted to the stage 40 side and the sample 41 side. The beam splitter 20 changes the path of the white light so that the path of the white light provided to the sample 41 side has the predetermined angle with the sample 41 side. The white light is irradiated to the sample 41 to have the predetermined angle. Accordingly, the optical axis irradiated to the sample 41 is tilted at the predetermined angle.

The beam splitter 20 may be tilted to maintain the predetermined angle with the surface of the sample 41. The white light transmitted to the sample 41 side is reflected to the beam splitter 20 as the measurement beam and is transmitted to the CCD image sensor 60 past the beam splitter 20.

The CCD (charge coupled device) image sensor 60 receives the measurement beam reflected from a sample 41 and the reflection beam reflected from a mirror 30 from a beam splitter 20. The CCD image sensor 60 receives the measurement beam and the reflection beam from the beam splitter 20 while the stage movement assembly 50 moves the stage 40 in the X-axis direction or the optical movement assembly 81 moves the scanning assembly 80 in the X-axis direction.

The CCD image sensor 60 receives the measurement beam and the reflection beam from the sample 41 when the stage 40 is moved in the X-axis direction or the scanning assembly 80 is moved in the X-axis direction and captures an interference pattern generated by the measurement beam and the reflection beam, wherein the optical axis irradiated to the sample 41 is tilted at a predetermined angle as the scanning assembly 80 and the sample 41 are tilted to each other by a predetermined angle.

The CCD image sensor 60 continuously captures interference pattern while the stage 40 moves in the X-axis direction or the scanning assembly 80 moves in the X-axis direction to generate a plurality of interference pattern images.

The CCD image sensor 60 continuously captures interference patterns of pixels generated by the measurement beam and the reflection beam while the stage 40 is moved in the X-axis direction or the scanning assembly 80 is moved in the X-axis direction. The CCD image sensor 60 continuously captures interference patterns to generate a plurality of interference pattern images. Here, the pixel means a unit pixel included in the XY plane of the interference pattern image.

The CCD image sensor 60 transmits a plurality of continuously captured interference pattern images to the image analysis processor 70.

The image analysis processor 70 generates a white light interference pattern signal (WLI fringe signal) by flattening a plurality of interference pattern images received from the CCD image sensor 60. The image analysis processor 70 analyzes the generated white light interference pattern signal to derive the surface shape of the sample 41, specifically, the height and the step of the sample 41. Since the white light interferometer 100 measures the surface shape using light reflected from the sample 41, it has the advantage of being able to measure quickly without damaging the sample 41.

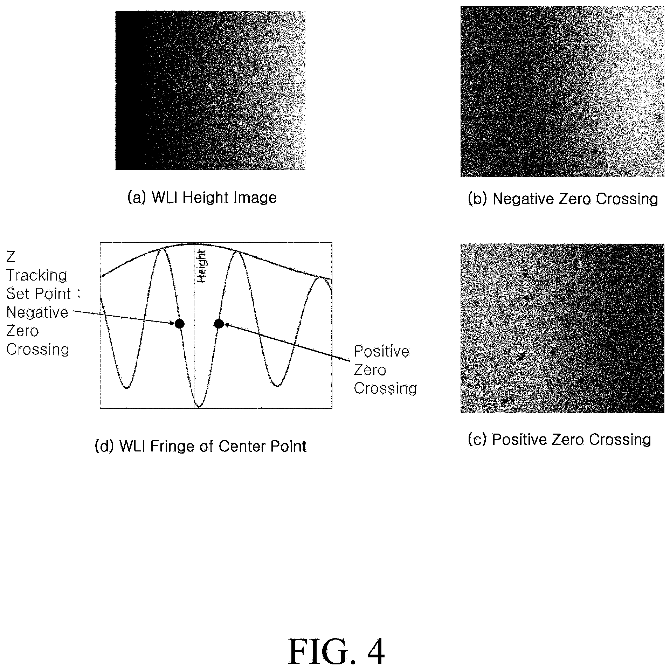

The image analysis processor 70, according to the present invention, extracts a Z value at a zero-crossing point where the intensity of light changes rapidly, by analyzing the generated white light interference pattern signal (See (d) of FIG. 4). The optical movement assembly 81 moves the scanning assembly 80 from the surface of the sample 41 to a position corresponding to the Z value based on the Z value extracted by the image analysis processor 70. The stage movement assembly 50 moves the stage 40 in the X-axis direction after the scanning assembly 80 moves to a position corresponding to the Z value. The CCD image sensor 60 receives measurement beam and reflection beam from a scanning assembly 80 maintained in a position corresponding to a Z value to generate a plurality of interference pattern images while a stage movement assembly 50 moves a stage 40, and the image analysis processor 70 merges the generated plurality of interference pattern images to obtain the surface shape image of the sample 41.

In summary, the white light interferometer 100 according to an embodiment of the present invention tilts the scanning assembly 80 to have the predetermined angle with the sample 41, moves the stage 40 in the X-axis direction while being spaced apart from the scanning assembly 80 by the Z value at the zero-crossing point between the scanning assembly 80 and the sample 41, and continuously captures the interference pattern generated by the measurement beam of the white light irradiated to the sample 41 and the reflection beam reflected from the mirror 30. A plurality of interference pattern images generated by being continuously captured are merged into a surface shape image of the sample 41.

In the present specification, the separation distance between the scanning assembly 80 and the sample 41 means the separation distance between the WLI lens in the scanning assembly 80 and the surface of the sample 41. For example, in case that the scanning assembly 80 moves from the surface of the sample 41 to a position corresponding to the Z value, it can be understood that the distance between the WLI lens in the scanning assembly 80 and the surface of the sample 41 corresponds to the Z value. At this time, the WLI lens in the scanning assembly 80 may mean a lens disposed between the beam splitter 20 and the sample 41.

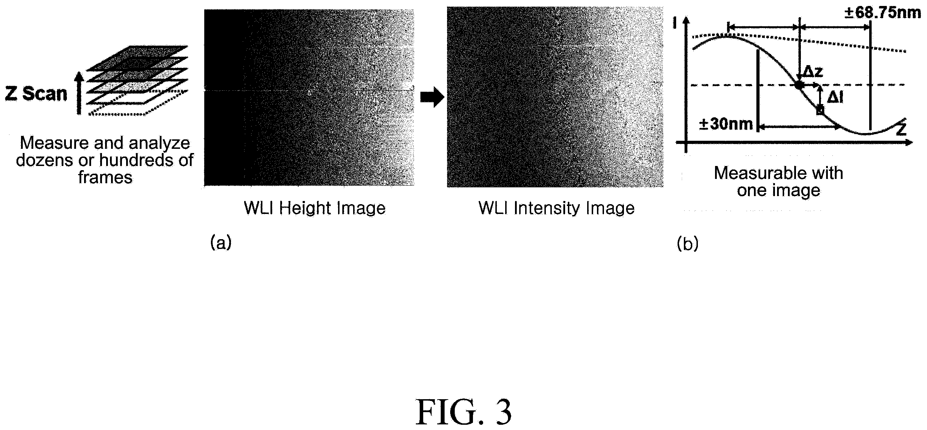

FIG. 3 is a view showing a surface shape image of the sample 41 obtained from a conventional white light interferometer and a surface shape image of the sample 41 obtained from a white light interferometer 100, according to the present invention. Specifically, (a) of FIG. 3 is the surface shape image of the sample 41 obtained from the conventional white light interferometer, and (b) of FIG. 3 is the surface shape image of the sample 41 obtained from the white light interferometer 100, according to the present invention.

Referring to FIG. 3, the conventional white light interferometer has obtained an interference pattern according to a change in the Z-axis distance between a stage 40 on which a sample 41 is placed, and an optical system such as a beam splitter 20 and a CCD image sensor 60, as described above. The conventional white light interferometer has a problem in that it takes a long time to scan the shape of the sample 41 as it obtains interference patterns of any one frame by varying a Z-axis distance between the stage 40 at a specific position of the sample 41 and an optical system, moves the sample 41 or the optical system by a certain distance to the X-axis, and then again changes the Z-axis distance between the stage 40 and the optical system to obtain interference patterns of another adjacent frame, and measured tens to hundreds of frames at a specific position by scanning the sample 41 after accumulated or stitched a plurality of obtained interference patterns, and measures dozens to hundreds of frames again at another specific position.

However, the white light interferometer 100, according to the present invention, positions the scanning assembly 80 at a position corresponding to the Z value at the zero-crossing point and then obtains only one image in one frame. Further, the white light interferometer 100, according to the present invention, moves the stage 40 in the x-direction with the scanning assembly 80 held in a position corresponding to the Z value to obtain only one image for each frame, and then merges each image to obtain an image of the surface shape of the sample 41. The image of the surface shape of the sample 41 obtained by the white light interferometer 100, according to the present invention, ((b) of FIG. 3, WLI Intensity Image) and the image of the surface shape of the sample 41 obtained by the conventional white light interferometer ((a) of FIG. 3, WLI Height Image) are very similar to each other, and thus an image of the surface shape of the sample 41 can be obtained within a shorter time than that of the conventional white light interferometer.

The white light interferometer 100, according to the present invention, simplified the measurement while maintaining the sensitivity of the WLI measurement. The white light interferometer 100, according to the present invention, obtains only one image at a point where the intensity of light changes most urgently according to the Z value in order to maintain the sensitivity of the WLI measurement.

In addition, the white light interferometer 100, according to the present invention, measures only the region where the height and the WLI INTENSITY are linear, in order to simplify the calculation of the height (Step) of the surface shape of the sample 41, and at this time, the Z value, which is the point where the intensity of light changes most rapidly, exists in the region (+30 nm) where the white light interference pattern signal and the height of the surface of the sample 41 are linearly aligned.

The zero-crossing point, where the intensity of light changes most rapidly in the white light interference pattern signal, is located near the center with the highest intensity of light. Zooming in on the central region, it is shown in the graph of (d) of FIG. 4. When the scanning assembly 80 is located at each position corresponding to a plurality of Z values from the center of the graph of (d) of Fig. 4 and looking into the interference pattern (WLI Intensity Image) according to the measurement beam and the reflection beam, the interference pattern changes most sensitively at a specific point (Negative Zero-crossing, Positive Zero-crossing). At the fringe peak of the interference pattern signal, the pattern is not distinguished or instead reversed. The point at which the interference pattern changes most sensitively is referred to as a zero-crossing point in the present specification. A white light interferometer 100, according to the present invention, captures an interference pattern image by positioning a scanning assembly 80 at a position corresponding to the Z value of its zero-crossing point.

FIG. 4 is a view for exemplifying a negative zero-crossing point, according to the present invention. Specifically, (a) of FIG. 4 is an interference pattern image obtained using the conventional white light interferometer, (b) of FIG. 4 is an interference pattern image obtained after a scanning assembly 80 is located at a Z value at a negative zero-crossing point in the white light interferometer 100, according to the present invention, and (c) of FIG. 4 is an interference pattern image obtained after the scanning assembly 80 is located at a Z value at a positive zero-crossing point in the white light interferometer 100, according to the present invention, and (d) of FIG. 4 is a zoomed-in view near the center of the white light interference pattern signal (WLI Fringe) generated by an image analysis processor 70.

As for the zero-crossing points where the intensity of light in the white light interference pattern signal changes most rapidly, there are negative zero-crossing points and positive zero-crossing points, referring to (d) of FIG. 4.

In (b) of FIG. 4, an interference pattern image obtained from a scanning assembly 80 located at a negative zero-crossing point is shown, and in (c) of FIG. 4, an interference pattern image obtained from a scanning assembly 80 located at a positive zero-crossing point is shown.

Comparing (b) of FIG. 4 and (c) of FIG. 4 with (a) of FIG. 4, respectively, it can be seen that (b) of FIG. 4 shows the same interference pattern as (a) of FIG. 4, and (c) of FIG. 4 shows the opposite interference pattern to (a) of FIG. 4.

Therefore, the zero-crossing point, according to the present invention, to simplify the calculation, when the zero-crossing point of the Z value is applied, is selected and applied as a negative zero-crossing point among the negative zero-crossing points and the positive zero-crossing points.

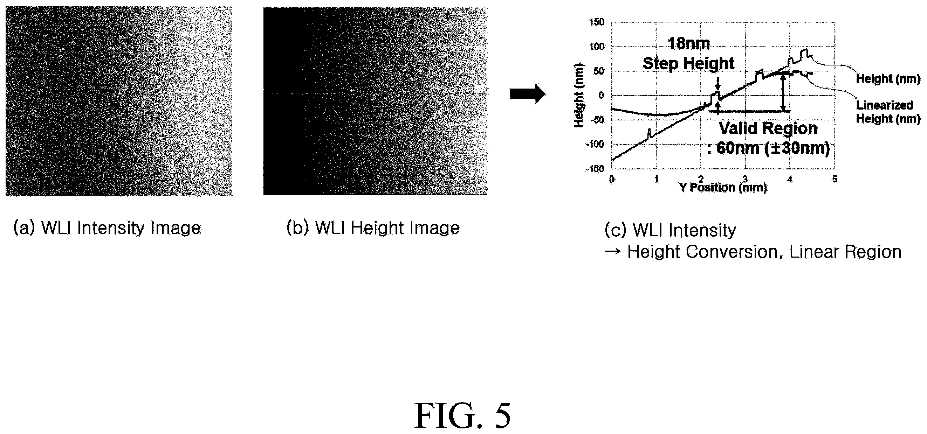

FIG. 5 is a view for exemplifying a position where a Z value of a zero-crossing point exists, according to the present invention. Specifically, (a) of FIG. 5 is an interference pattern image obtained after the scanning assembly 80 is located at the Z value of the negative zero-crossing point in the white light interferometer 100, according to the present invention, (b) of FIG. 5 is an interference pattern image obtained using a conventional white light interferometer, and (c) of FIG. 5 is an image showing the interference pattern signal of (a) and (b) of FIG. 5.

Referring to (c) of FIG. 5, it can be seen that the interference pattern signal (Height) generated from the interference pattern image obtained using the conventional white light interferometer and the interference pattern signal (Linearized Height) generated from the interference pattern image obtained after the scanning assembly 80 is located at the Z value of the negative zero-crossing point in the white light interferometer 100, according to the present invention, are linear in a certain region.

That is, there is a Valid Region in which the interference pattern image obtained (Linearized Height), after the scanning assembly 80 is located at the Z value of the negative zero-crossing point is linearly aligned with the actual surface step (Height) of the sample 41, and the Z value exists in that region. That is, the Z value at the zero-crossing point exists within a region in which the white light interference pattern signal and the height of the surface of the sample 41 coincide linearly with each other, and for example, the range of the Z value of the region is ±30 nm, which is 60 nm in total.

Therefore, since the Z value at the zero-crossing point exists within the ±30 nm range, the scanning assembly 80 must be located within the ±30 nm range for the sample 41. As described above, the optical movement assembly 81 moves the scanning assembly 80 with respect to the sample 41 to a position corresponding to the Z value of the zero-crossing point. After the scanning assembly 80 is located at the Z value of the zero-crossing point, the stage 40 is moved in the X-axis direction by the stage movement assembly 50.

At this time, when the height of the surface of the sample 41 is changed by the step present in the sample 41, the Z scanner 82 detects the height of the surface of the sample 41 changed by the step, and based on the height of the detected surface of the sample 41, the height and position of the scanning assembly 80 with respect to the sample 41 are controlled by the Z servo 83.

That is, the optical movement assembly 81 fluctuates the position of the scanning assembly 80 so that the distance between the scanning assembly 80 and the surface of the sample 41 maintains the Z value of the zero-crossing point, so that the scanning assembly 80 is Z-tracked to be positioned within the range of ±30 nm with respect to the sample 41, when the stage 40 is moved in the X-axis direction.

As shown in (a) of FIG. 5, in the white light interferometer 100, according to the present invention, the position of the scanning assembly 80 or the step on the surface of the sample 41 may be calculated based on the interference pattern image obtained after the scanning assembly 80 is located at the Z value of the negative zero-crossing point, using the Equation 1 below.

$$\Delta h = \frac{I - I_0}{s}$$

<Equation 1>

wherein, $\triangle h$ is a step of the sample 41, $I$ is the intensity of light of a pixel in an image captured at a zero-crossing point, $I_0$ is the reference intensity, and $s$ is a constant.

Using Equation 1, a step of the sample 41 corresponding to the specific pixel may be calculated based on the intensity of light of the specific pixel. $I_0$ is the reference light intensity and may be $I_0=140$ as an embodiment. $s$ is a constant, and $s$ is divided to convert the step of the sample 41 into nm units. $s$ may be 1.75 as an embodiment.

Applying the conditions to Equation 1 yields Equation 2 below.

$$\Delta h[\text{nm}] = \frac{I - 140}{1.75}$$

<Equation 2>

Here, $\triangle h$ is the step of the sample 41, and $I$ is the intensity of the light of the pixel in the image captured at the zero-crossing point.

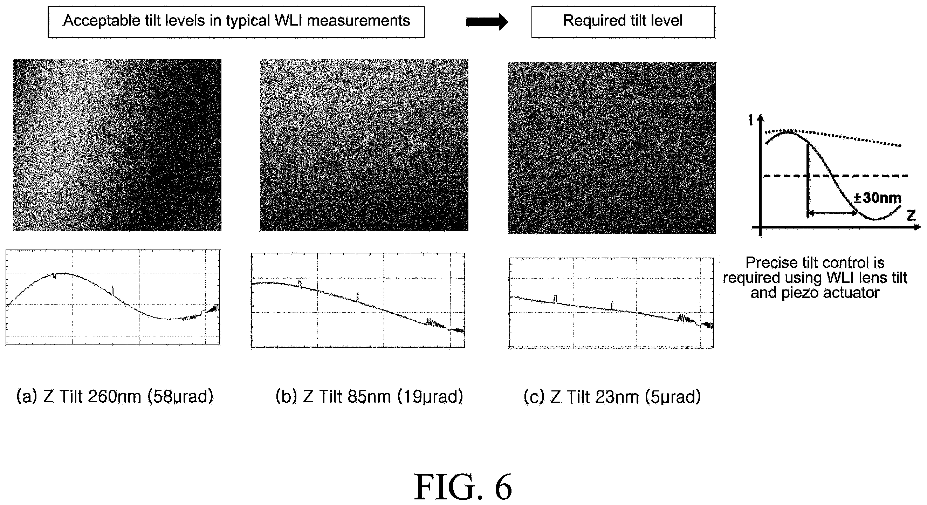

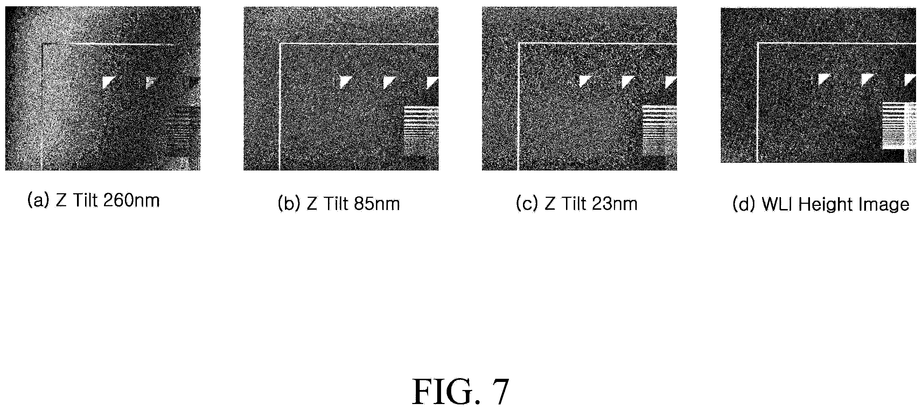

FIG. 6 is a view for exemplifying the degree to which the scanning assembly 80, according to the present invention, is tilted with respect to the sample 41. Specifically, (a) and (b) of FIG. 6 are views showing an interference pattern on the surface of a sample 41 obtained by a conventional lateral scanning interferometry, and (c) of FIG. 6 is a view showing an interference pattern on the surface of a sample 41 obtained by the white light interferometer 100, according to the present invention. FIG. 7 is a view for exemplifying the saturation phenomenon of WLI Intensity according to the degree of a tilt of the scanning assembly 80.

As described above, the scanning assembly 80, according to the present invention, maintains a state tilted at a predetermined angle with respect to the sample 41.

In the conventional white light interferometer, there is a lateral scanning interferometry (Lateral Scanning WLI) to solve the problem of the vertical scanning interferometry described above. The conventional lateral scanning interferometry scans the surface of the sample 41 by moving an optical system in a lateral direction with respect to the sample 41 and obtains the shape of the surface of the sample 41 based on a change in the phase difference of an interference pattern formed on the surface of the sample 41. The conventional lateral scanning interferometry tilts an optical system to such an extent that an interference pattern can easily occur on the surface of the sample 41 by analyzing the interference pattern formed on the surface of the sample 41, for example, has a tilt level of z tilt of 260 nm as shown in (a) of FIG. 6 or 85 nm as shown in (b) of FIG. 6.

However, the scanning assembly 80, according to the present invention, requires a tilt level of $\pm 30$ nm in z tilt. The scanning assembly 80, according to the present invention, requires a tilt level of $\pm 30$ nm in z tilt because the intensity must appear linearly in all areas in the image.

Accordingly, as shown in (c) of FIG. 6, the scanning assembly 80, according to the present invention, is tilted at a predetermined angle so that the entire interference pattern image is contained within the same interference pattern or so that the interference pattern does not appear. That is, the scanning assembly 80 is tilted at a predetermined angle so that the entire interference pattern image is included in either the dark portion or the bright portion of the interference pattern.

In the conventional lateral scanning interferometry, it works well even if the interference pattern within the image has a tilt of about 1 (235 nm), but in the interferometry based on the Z value of zero-crossing, according to the present invention, the entire image must be located within the Linear Region ($\pm 30$ nm).

Referring to (a) and (b) of FIG. 7, it can be seen that in the conventional lateral scanning interferometry, the texture of the surface of the sample 41 is not measured due to the occurrence of the intensity saturation in a specific pixel according to the occurrence of an interference pattern in an image. On the other hand, referring to (c) of FIG. 7, it can be seen that the scanning assembly 80, according to the present invention, can measure the Fine Texture from the entire image as it is tilted at a predetermined angle so that the interference pattern image is entirely included in the same interference pattern or the interference pattern does not appear.

According to the zero-crossing interferometry of the present invention, when the tilt exceeds the linear region ($\pm 30$ nm), the texture (~1 nm) of the surface of the sample 41 cannot be clearly measured. However , by reducing the z-tilt to within $\pm 30$ nm, the fine texture may be measured across all image areas, similar to the WLI Height Image as shown in (d) of FIG. 7.

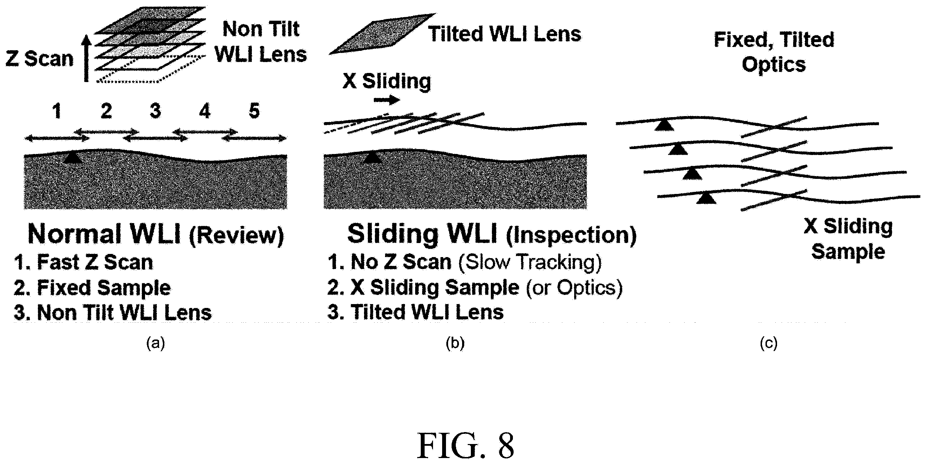

FIG. 8 is a diagram illustrating a conventional white light interferometry and a white light interferometry, according to the present invention.

As shown in (a) of FIG. 8, the conventional white light interferometry is a vertical scanning interferometry, in which it obtains interference patterns of any one frame by varying a Z-axis distance between the stage 40 at a specific position of the sample 41 and an optical system, moves the sample 41 or the optical system by a certain distance to the X-axis, and then again changes the Z-axis distance between the stage 40 and the optical system to obtain interference patterns of another adjacent frame, and scans the sample 41 after accumulated or stitched a plurality of obtained interference patterns.

On the other hand, as shown in (b) and (c) of FIG. 8, in the white light interferometer 100, according to the present invention, the scanning assembly 80 tilted at a predetermined angle slides the surface of the sample 41 to obtain surface shape information of the sample 41.

As shown in (c) of FIG. 8, in the white light interferometer 100, according to the present invention, the stage 40 may move in the x direction while the scanning assembly 80 maintains the Z value of the zero-crossing point.

As shown in (b) of FIG. 8, the white light interferometer 100, according to the present invention, may obtain surface shape information of the sample 41 as the scanning assembly 80 moves in the x-direction during the scanning assembly 80 maintaining the Z value of the zero-crossing point.

The optical movement assembly 81 moves the scanning assembly 80 in the Z-axis direction toward the sample 41 to maintain it at the Z value of the zero-crossing point. The optical movement assembly 81 may move the scanning assembly 80 to the X-axis on which the sample 41 is scanned while maintaining the scanning assembly 80 at the Z value of the zero-crossing point.

Thereafter, the CCD image sensor 60 receives measurement beam and reflection beam from the scanning assembly 80 while the optical movement assembly 81 moves the scanning assembly 80 in the X-axis direction, thereby generating a plurality of interference pattern images.

In addition, without moving the scanning assembly 80, the separation distance between the stage 40 and the scanning assembly 80 may be adjusted so that the stage 40 moves in the z direction and the scanning assembly 80 is located at the Z value of the zero-crossing point. After the stage 40 moves in the z direction, the stage 40 may move in the x direction, or the scanning assembly 80 may move in the x direction.

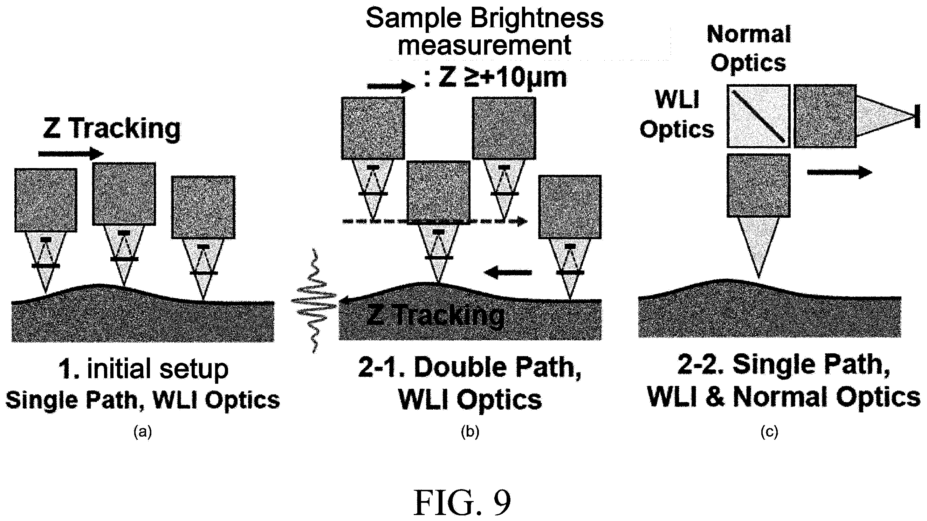

FIG. 9 is a diagram illustrating a state in which the scanning assembly 80, according to the present invention, slides the surface of the sample 41.

In (a) of FIG. 9, there is shown a diagram illustrating a state in which the scanning assembly 80 obtains surface information of the sample 41 while sliding on the surface of the sample 41.

As described above, the scanning assembly 80 scans the surface of the sample 41 while maintaining the Z value at a constant zero-crossing point due to the step of the sample 41.

However, if a transparent film is disposed on the surface of the sample 41, or the sample 41 has a multilayer structure of different colors, or the sample 41 includes a thick film, an image analysis processor 70 obtains a surface shape image of the sample 41 after correcting the brightness of the surface shape image of the sample 41.

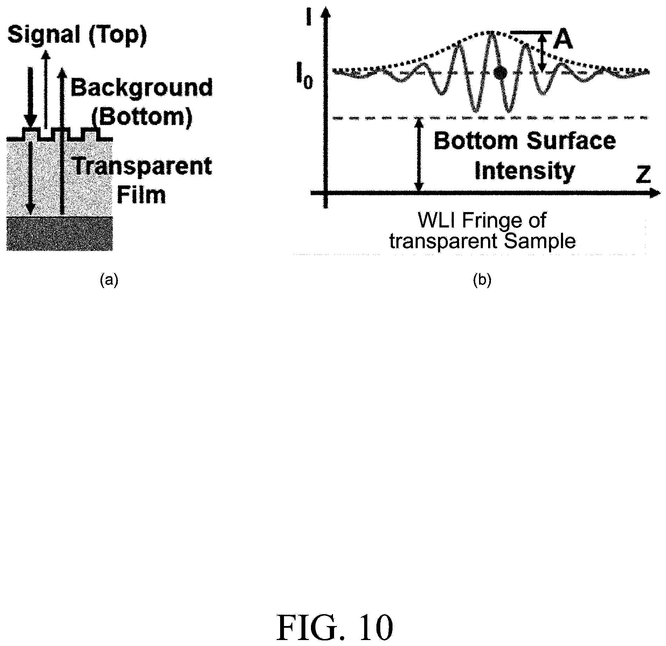

FIG. 10 is a diagram illustrating sample 41 with a transparent film.

Referring to FIG. 10, when the scanning assembly 80 scans the surface of the sample 41, even if focusing on the surface of the sample 41, as the sample 41 includes a transparent film, the intensity of light in the transparent film is included in the measurement. Therefore, the image analysis processor 70 measures the brightness of the sample 41 itself and corrects the measurement by subtracting it, leaving only the components on the surface of the sample 41, thereby obtaining a surface shape image of the corrected sample 41.

The image analysis processor 70 obtains the surface shape image of the sample 41 by flattening a plurality of interference pattern images, and then appropriately increases a contrast in the obtained surface shape image of the sample 41 to similarly correct the WLI Intensity Image and the WLI Height Image.

When the brightness of the surface shape image of the sample 41 is corrected, the image analysis processor 70 measures the degree of the brightness of the sample 41 and subtracts it from the surface shape image of the sample 41 to correct the brightness of the surface shape image of the sample 41.

When the brightness of the surface shape image of the sample 41 of the image analysis processor 70 is corrected, as shown in (b) of FIG. 9 and (c) of FIG. 9, two embodiments of the Double Path method and the Single Path method are included.

First, as an embodiment of the surface shape image brightness correction of the sample 41 of the image analysis processor 70, the scanning assembly 80 reciprocates the surface of the sample 41 (Double Path) as shown in (b) of FIG. 9 to correct the brightness of the surface shape image of the sample 41.

First, the scanning assembly 80 is first spaced from the sample 41 by at least 10 μm from the zero-crossing point, and then the scanning assembly 80 or stage 40 moves in the x-direction to measure the brightness of the sample 41 itself, and then the scanning assembly 80 or stage 40 moves in the -x direction and returns to be positioned at the Z-value, which is the zero-crossing point, to scan the surface of the sample 41. Alternatively, the scanning assembly 80 may measure the brightness of the sample 41 itself in spaced 10 μm or more apart from the zero-crossing point as the scanning assembly 80 or stage 40 moves in the x-direction to scan the surface of the sample 41 and then returns by moving in the -x direction again while being located at the Z value, which is the zero-crossing point. The image analysis processor 70 may obtain a surface shape image of the corrected sample 41 by subtracting as much as the brightness of the sample 41 itself from the surface image of the scanned sample 41.

Specifically, the stage movement assembly 50 moves the stage 40 in the X-axis direction in which the sample 41 is scanned, and then moves the stage 40 again in the -X-axis direction. Alternatively, the scanning assembly 80 may be moved in the -X-axis direction again after moving in the X-axis direction by the optical movement assembly 81. The optical movement assembly 81 maintains the scanning assembly 80 in a position 10 μm to 100 μm higher than the Z value, which is the zero-crossing point, with respect to the surface of the sample 41 when the stage 40 is moved in the X-axis direction, such that the CCD image sensor 60 measures the brightness degree of said sample 41, and when the stage 40 is moved in the -X-axis direction, maintains the scanning assembly 80 in a position corresponding to that Z value with respect to the surface of the sample 41, such that the CCD image sensor 60 generates an interference pattern image of the sample 41. In addition, as described above, instead of moving the stage 40 in the X-axis and -X-axis, the scanning assembly 80 may move in the X-axis and -X-axis directions.

As another embodiment of the surface shape image brightness correction of the sample 41 of the image analysis processor 70, as shown in (c) of FIG. 9, the scanning assembly 80 may correct the brightness of the surface shape image of the sample 41 by moving the surface of the sample 41 in a Single Path. When moving along a single path, a beam splitter 21 (See FIG. 11) that transmits more light than it reflects is included to measure the brightness of the sample 41 itself.

FIG. 11 is a diagram illustrating the scanning assembly 80, according to the present invention, that measures the surface brightness of the sample 41 by moving the surface of the sample 41 in a single path.

In (a) of FIG. 11, a diagram illustrating a state in which the white light interferometer 100, according to the present invention, is applied to the Linnik interferometer, and in (b) of FIG. 11, a diagram illustrating a state in which the white light interferometer 100, according to the present invention, is applied to the Michelson interferometer. In the case of a Linnik interferometer, the beam splitter 20 may include a first beam splitter 21 and a second beam splitter 23.

When the scanning assembly 80 moves the surface of the sample 41 in a single path to measure the surface brightness of the sample 41, the CCD image sensor 60 includes a first CCD image sensor 61 for measuring the brightness of the sample 41 itself and a second CCD image sensor 63 for obtaining an interference pattern image of the sample 41 surface.

As described above, the beam splitter 20 includes a beam splitter 21 that transmits more light than light reflection.

The beam splitter 21 splits the measurement beam reflected from the sample 41 and the reflection beam reflected from the mirror 30 and transmits it to the first CCD image sensor 61 and the second CCD image sensor 63.

The beam splitter 21 transmits and reflects the measurement beam reflected from the sample 41, and the measurement beam transmitted from the beam splitter 21 is transmitted to the first CCD image sensor 61, and the measurement beam reflected from the beam splitter 21 is transmitted to the second CCD image sensor 63.

The beam splitter 21 transmits and reflects the reflection beam reflected from the mirror 30, and the reflection beam transmitted from the beam splitter 21 is transmitted to the second CCD image sensor 63, and the reflection beam reflected from the beam splitter 21 is transmitted to the first CCD image sensor 61.

Since beam splitter 21 transmits more light than it reflects, the measurement beam transmitted to the first CCD image sensor 61 has a larger amount of light than the reflection beam transmitted to the first CCD image sensor 61. Accordingly, the first CCD image sensor 61 may measure the brightness of the sample 41 itself by receiving more measurement beam than the reflection beam reflected from the mirror 30.

In an embodiment, a beam splitter 21 having 90:10 light transmission-to-reflection ratio may be applied, as the beam splitter 21. When a beam splitter 21 having a light transmission and reflection ratio of 90:10 is applied, 81% of the total white light is received by the first CCD image sensor 61 as the transmitted beam from the beam splitter 21, and 1% of the total white light is received by the first CCD image sensor 61 as the reflection beam from the beam splitter 21. Therefore, because the first CCD image sensor 61 limits the reflection beam reflected from the mirror 30 to about 1% of the total white light, the brightness of the sample 41 itself may be measured.

On the other hand, 9% of the total white light is received by the second CCD image sensor 63 as the measurement beam reflected by the beam splitter 21 and 9% of the total white light is received by the second CCD image sensor 63 as the reflection beam transmitted by the beam splitter 21. Accordingly, as the second CCD image sensor 63 receives the same amount of measurement beam and reflection beam, an interference pattern image on the surface of the sample 41 may be obtained.

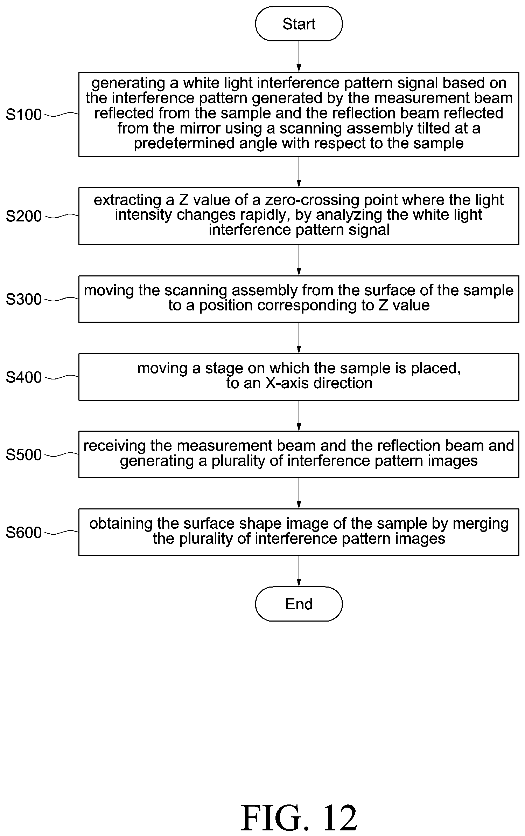

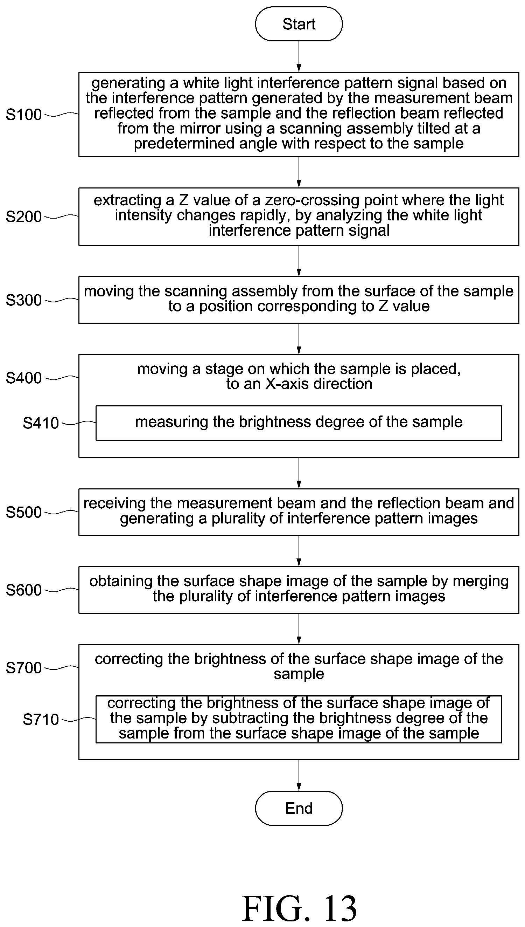

FIGS. 12 and 13 are flowcharts of a method of capturing an instantaneous white light interference pattern image of a white light interferometer, according to the present invention.

In the instantaneous white light interference pattern image capturing method of a white light interferometer 100, according to the present invention, includes generating a white light interference pattern signal based on an interference pattern captured by a CCD image sensor 60, extracting a Z value of a zero-crossing point based on the generated white light interference pattern signal, capturing the surface of a sample 41 to generate an interference pattern image after locating a scanning assembly 80 at a position of the Z value of the extracted zero-crossing point, and obtaining a surface shape image of the sample 41 by merging a plurality of interference pattern images.

Specifically, the instantaneous white light interference pattern image capturing method of the white light interferometer 100, according to the present invention, referring to FIG. 12, includes generating a white light interference pattern signal based on the interference pattern generated by the measurement beam reflected from the sample 41 and the reflection beam reflected from the mirror 30 using a scanning assembly 80 tilted at a predetermined angle with respect to the sample 41, S100, extracting a Z value of a zero-crossing point where the light intensity changes rapidly, by analyzing the white light interference pattern signal, by an image analysis processor 70, S200, moving the scanning assembly 80 from the surface of a sample 41 to a position corresponding to that Z value, based on the Z value of the zero-crossing point, by the optical movement assembly 81, S300, moving a stage 40 on which the sample 41 is placed, to an X-axis direction, by the stage movement assembly 50, S400, receiving the measurement beam and the reflection beam from a scanning assembly 80 and generating a plurality of interference pattern images, by the CCD image sensor 60, S500, and obtaining the surface shape image of the sample 41, by merging the plurality of interference pattern images, by the image analysis processor 70, S600.

In step S200, the zero-crossing point means a negative zero-crossing point in a region where the intensity of light decreases as the Z value increases.

In step S400, the optical movement assembly 81 fluctuates the position of the scanning assembly 80 so that the distance between the scanning assembly 80 and the surface of the sample 41 maintains the Z value of the zero-crossing point. The optical movement assembly 81 supports Z tracking between the surface of the sample 41 and the scanning assembly 80, and when a step occurs on the surface of the sample 41, the position of the scanning assembly 80 is varied according to the step so that a separation distance between the sample 41 and the scanning assembly 80 is maintained at a Z value at a zero-crossing point when scanning the surface of the sample 41.

The instantaneous white light interference pattern image capturing method of the white light interferometer 100, according to the present invention, further includes, referring to FIG. 13, correcting the brightness of the surface shape image of the sample 41 when a transparent film is present on the surface of the sample 41, S700.

When a transparent film is present on the surface of the sample 41, S400 further includes measuring the brightness degree of the sample 41, S410, and S700 includes correcting the brightness of the surface shape image of the sample 41 by subtracting the brightness degree of the sample 41 from the surface shape image of the sample 41, S710.

S410 includes two embodiments of the Double Path method and the Single Path method when measuring the brightness degree of sample 41.

First, with respect to a Double Path method, S410 includes moving the stage 40 in an X-axis direction, in which a sample 41 is scanned, by the stage movement assembly 50, when movement assembly 50 moving the stage 40 in an X-axis direction in which the sample 41 is being scanned, the optical movement assembly 81, includes, measuring a brightness degree of the sample 41 by CCD image sensor 60, which the scanning assembly 80 is maintained in a position 10 $\mu$m to 100 $\mu$m higher than a Z value at a zero-crossing point with respect to a surface of the sample 41 during the stage 40 is being moved in the X-axis direction, measuring a brightness degree of the sample 41 by the CCD image sensor 60, and the optical movement assembly 81 includes after moving the stage 40 in -X direction by the stage movement assembly 50, capturing the interference pattern image of the sample 41 at the Z value corresponding to the zero-crossing point after moving the scanning assembly 80 relative to the surface of the sample 41.

With respect to the single path method, S410 includes transmitting measurement beam reflected from a sample 41 and reflection beam reflected from a mirror 30 split by a beam splitter 21 having more light transmission than light reflection to a first CCD image sensor 61 measuring the brightness of the sample 41 and a second CCD image sensor 63 obtaining an interference pattern image of the surface of the sample 41, in the transmitting, the beam splitter 21 transmits and reflects the measurement beam reflected from the sample 41, the measurement beam transmitted from the beam splitter 21 is transmitted to the first CCD image sensor 61, and the measurement beam reflected from the beam splitter 21 is transmitted to the second CCD image sensor 63. In the transmitting, the beam splitter 21 transmits and reflects the reflection beam reflected from the mirror 30, the reflection beam transmitted from the beam splitter 21 is transmitted to the second CCD image sensor 63, and the reflection beam reflected from the beam splitter 21 is transmitted to the first CCD image sensor 61. In the transmitting, the first CCD image sensor 61 receives brighter measurement beam transmitted from the beam splitter 21 than reflection beam from the beam splitter 21 to measure the brightness of the sample 41.

In the present specification, the image analysis processor 70 may be processors that execute continuous execution processes stored in a memory. Alternatively, the image analysis processor 70 may operate as software modules driven and controlled by the processor. Furthermore, the image analysis processor 70 may be a hardware device.

For reference, the instantaneous white-light interference pattern-capturing method of the white-light interferometer 100 according to an embodiment of the present invention may be implemented as program instructions executed by various computer means and recorded on a computer-readable medium. The computer-readable medium may include program instructions, data files, data structures, and the like, alone or in combination. The program instructions recorded in the medium may be specially designed and configured for the present invention or may be known and usable to a person with skills in computer software. Examples of computer-readable media may include magnetic media such as hard disks, floppy disks, and magnetic tapes; optical recording media such as CD-ROMs and DVDs;

magnetic-optical media such as floptical disks; and hardware devices specifically configured to store and execute program instructions, such as ROM, RAM, and flash memory. Examples of program instructions include machine language code generated by compilers, as well as higher-level code that can be executed by computers using interpreters. The above-described hardware device may be configured to operate as one or more software modules to operate the present invention, and vice versa.

In the present specification, the term "unit" includes units implemented in hardware, in software, or in both. Furthermore, a single unit may be implemented using two or more pieces of hardware, and two or more units may be implemented using a single piece of hardware.

The scope of protection of the present invention is not limited to the description and expression of the embodiments explicitly described above. Furthermore, it should be noted that the scope of protection of the present invention may not be limited by obvious modifications or substitutions within the technical field to which the present invention pertains.

## Claims

1. An instantaneous white light interferometry (WLI) that obtains the shape of the sample by capturing an interference pattern generated by a measurement beam reflected from the sample and a reflection beam reflected from a mirror via a scanning assembly tilted at a predetermined angle with respect to the sample, the white light interferometry comprising

    a light source providing white light;
    a stage on which a sample is placed;
    a mirror having a reflective surface;
    a beam splitter splitting a path of white light provided from the light source into the sample side and the mirror side;
    a stage movement assembly moving the stage in an X-axis direction in which the sample is scanned;
    an optical movement assembly moving the scanning assembly in a Z-axis direction toward the sample;
    CCD (Charge Coupled Device) image sensor receiving the measurement beam and the reflection beam and capturing an interference pattern generated by the measurement beam and the reflection beam; and
    an image analysis processor generating a white light interference pattern signal (WLI fringe) based on the interference pattern,
    wherein the image analysis processor extracts a Z value at a zero-crossing point where the intensity of light changes rapidly, by analyzing the white light interference pattern signal wherein the optical movement assembly moves the scanning assembly from the surface of the sample to a position corresponding to the Z value based on the Z value,

wherein the stage movement assembly moves the stage in the X-axis direction after the scanning assembly moves to a position corresponding to the Z value,

wherein the CCD image sensor generates a plurality of interference pattern images by receiving the measurement beam and the reflection beam from the scanning assembly maintained at a position corresponding to the Z value while the stage movement assembly moves the stage, and wherein the image analysis processor obtains a surface shape image of the sample by merging the plurality of interference pattern images.

2. The instantaneous white light interferometry of claim 1 is **characterized in that** the optical movement assembly fluctuates the position of the scanning assembly so that the distance between the scanning assembly and the surface of the sample maintains the Z value when the stage is moved in the X-axis direction.

3. The instantaneous white light interferometry of claim 1 is **characterized in that** the zero-crossing point is a negative zero-crossing point present in a region in which the intensity decreases as the Z value increases.

4. The instantaneous white light interferometry of claim 1 is **characterized in that** the Z value exists within a region in which the white light interference pattern signal and the height of the sample surface coincide with each other linearly.

5. The instantaneous white light interferometry of claim 4 is **characterized in that** the Z value is in the range of -30 nm to +30 nm.

6. The instantaneous white light interferometry of claim 1 is **characterized in that** the image analysis processor calculats the step of the sample based on the intensity of light at the zero-crossing point using Equation 1 below.

$$\Delta h = \frac{I - I_0}{s}$$

\<Equation 1\>

(wherein $\triangle h$ is the step of the sample, I is the intensity of light of the pixel in the image captured at the zero-crossing point, $I_0$ is the reference intensity, and s is the constant)

7. The instantaneous white light interferometry of claim 1 is **characterized in that** the scanning assembly tilted at a predetermined angle with respect to the sample is tilted at the predetermined angle so that the entire interference pattern image is included in the same interference pattern.

8. An instantaneous white light interferometry (WLI) that obtains the shape of a sample by capturing an interference pattern generated by a measurement beam reflected from the sample and a reflection beam reflected from a mirror via a scanning assembly tilted at a predetermined angle with respect to the sample, the white light interferometry comprising

a light source providing white light;
a stage on which a sample is placed;
a mirror having a reflective surface;
a beam splitter splitting a path of white light provided from the light source into the sample side and the mirror side;
an optical movement assembly moving the scanning assembly in an X-axis direction, in which the sample is scanned, and toward the sample in a Z-axis direction;
CCD (Charge Coupled Device) image sensor receiving the measurement beam and the reflection beam and capturing an interference pattern generated by the measurement beam and the reflection beam; and
an image analysis processor generating a white light interference pattern signal (WLI fringe) based on the interference pattern,
wherein the image analysis processor extracts a Z value at a zero-crossing point where the intensity of light changes rapidly, by analyzing the white light interference pattern signal,
wherein the optical movement assembly, after moving the scanning assembly from the surface of the sample to a position corresponding to the Z value based on the Z value, moves the scanning assembly in the X-axis direction while maintaining the scanning assembly at the position corresponding to the Z value with respect to the surface of the sample,
wherein the CCD image sensor generates a plurality of interference pattern images by receiving the measurement beam and the reflection beam from the scanning assembly while the optical movement assembly moves the scanning assembly in the X-axis direction, and
wherein the image analysis processor merges the plurality of interference pattern images to obtain a surface shape image of the sample.

9. An instantaneous white light interference pattern image capturing method of a white light interferometer, the method comprising:

generating a white light interference pattern signal based on an interference pattern generated by a measurement beam reflected from a sample and a reflection beam reflected from a mirror via a scanning assembly tilted at a predetermined angle with respect to the sample;
extracting a Z value at a zero-crossing point where the intensity of light changes rapidly by analyzing the white light interference pattern signal by an image analysis processor;
moving the scanning assembly based on the Z value, from the surface of the sample to a position corresponding to the Z value, by an optical movement assembly;
moving a stage on which the sample is placed, in the X-axis direction, by a stage movement assembly;
generating a plurality of interference pattern images by receiving the measurement beam and the reflection beam from the scanning assembly, by a CCD image sensor; and
obtaining a surface shape image of the sample by merging the plurality of interference pattern images, by the image analysis processor.

10. The method of claim 9 is characterized that in extracting the Z value at the zero-crossing point where the light intensity changes rapidly by analyzing the white light interference pattern signal by the image analysis processor, the zero-crossing point is the negative zero-crossing point present in the region where the intensity decreases as the Z value increases.

11. The method of claim 9 is characterized that in moving the stage on which the sample is placed in the X-axis direction by the stage movement assembly direction, the optical movement assembly fluctuates the position of the scanning assembly so that the distance between the scanning assembly and the surface of the sample maintains the Z value.

FIG. 1

FIG. 2

**Z Scan**

Measure and analyze dozens or hundreds of frames

WLI Height Image

WLI Intensity Image

(a)

±68.75nm

±30nm

$\Delta z$

$\Delta I$

Measurable with one image

(b)

FIG. 3

EP 4 772 827 A1

(a) WLI Height Image

(b) Negative Zero Crossing

(c) Positive Zero Crossing

(d) WLI Fringe of Center Point

FIG. 4

(a) WLI Intensity Image

(b) WLI Height Image

(c) WLI Intensity
→ Height Conversion, Linear Region

Height (nm)

Linearized Height (nm)

18nm Step Height

Valid Region : 60nm (±30nm)

Height (nm)

Y Position (mm)

# FIG. 5

±30nm

Precise tilt control is required using WLI lens tilt and piezo actuator

Required tilt level

Acceptable tilt levels in typical WLI measurements

(a) Z Tilt 260nm (58μrad)

(b) Z Tilt 85nm (19μrad)

(c) Z Tilt 23nm (5μrad)

FIG. 6

(a) Z Tilt 260nm  (b) Z Tilt 85nm  (c) Z Tilt 23nm  (d) WLI Height Image

FIG. 7

EP 4 772 827 A1

**Normal WLI (Review)**
1. Fast Z Scan
2. Fixed Sample
3. Non Tilt WLI Lens

(a)

**Sliding WLI (Inspection)**
1. No Z Scan (Slow Tracking)
2. X Sliding Sample (or Optics)
3. Tilted WLI Lens

(b)

(c)

FIG. 8

EP 4 772 827 A1

**Z Tracking**

**1. initial setup**
**Single Path, WLI Optics**

(a)

**Sample Brightness measurement**
: Z ≥+10μm

**Z Tracking**

**2-1. Double Path, WLI Optics**

(b)

**Normal Optics**

**WLI Optics**

**2-2. Single Path, WLI & Normal Optics**

(c)

FIG. 9

**Signal (Top)**

**Background (Bottom)**

**Transparent Film**

(a)

$I$

$I_0$

$A$

Bottom Surface Intensity

$Z$

WLI Fringe of transparent Sample

(b)

FIG. 10

| Beam | Path |
|------|------|
| 81% | T → S → T |
| 1% | R → M → R |
| 9% | T → S → R |
| 9% | R → M → T |

S : Samlpe reflection
M : Ref Mirror reflection
T:R : Beam Splitter
transmission, reflection

(a)

(b)

FIG. 11

Start

S100 — generating a white light interference pattern signal based on the interference pattern generated by the measurement beam reflected from the sample and the reflection beam reflected from the mirror using a scanning assembly tilted at a predetermined angle with respect to the sample

S200 — extracting a Z value of a zero-crossing point where the light intensity changes rapidly, by analyzing the white light interference pattern signal

S300 — moving the scanning assembly from the surface of the sample to a position corresponding to Z value

S400 — moving a stage on which the sample is placed, to an X-axis direction

S500 — receiving the measurement beam and the reflection beam and generating a plurality of interference pattern images

S600 — obtaining the surface shape image of the sample by merging the plurality of interference pattern images

End

# FIG. 12

Start

S100 — generating a white light interference pattern signal based on the interference pattern generated by the measurement beam reflected from the sample and the reflection beam reflected from the mirror using a scanning assembly tilted at a predetermined angle with respect to the sample

S200 — extracting a Z value of a zero-crossing point where the light intensity changes rapidly, by analyzing the white light interference pattern signal

S300 — moving the scanning assembly from the surface of the sample to a position corresponding to Z value

S400 — moving a stage on which the sample is placed, to an X-axis direction

S410 — measuring the brightness degree of the sample

S500 — receiving the measurement beam and the reflection beam and generating a plurality of interference pattern images

S600 — obtaining the surface shape image of the sample by merging the plurality of interference pattern images

S700 — correcting the brightness of the surface shape image of the sample

S710 — correcting the brightness of the surface shape image of the sample by subtracting the brightness degree of the sample from the surface shape image of the sample

End

FIG. 13

## INTERNATIONAL SEARCH REPORT

<table>
<tr><td>International application No.<br><br>**PCT/KR2024/096084**</td></tr>
</table>

**A.    CLASSIFICATION OF SUBJECT MATTER**

**G01B 9/0209**(2022.01)i; **G01B 9/02**(2006.01)i; **G01B 11/06**(2006.01)i; **G01B 11/24**(2006.01)i

According to International Patent Classification (IPC) or to both national classification and IPC

**B.    FIELDS SEARCHED**

Minimum documentation searched (classification system followed by classification symbols)

G01B 9/0209(2022.01); G01B 11/24(2006.01); G01B 11/25(2006.01); G01B 9/02(2006.01); G11B 7/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제로 크로싱(zero crossing), 백색광 간섭계(white light interferometer), 스테이지(stage), 간섭 무늬(interference fringe), 빔 스플리터(beam splitter), CCD 이미지 센서(ccd image sensor), 미러(mirror)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2014-0032665 A (INSPECTO INC.) 17 March 2014 (2014-03-17)<br>    See paragraphs [0031]-[0049] and figure 5. | 1-11 |
| A | JP 2009-211751 A (TAIYO YUDEN CO., LTD.) 17 September 2009 (2009-09-17)<br>    See paragraphs [0019]-[0022] and figure 1. | 1-11 |
| A | JP 2018-163092 A (TOKYO SEIMITSU CO., LTD.) 18 October 2018 (2018-10-18)<br>    See paragraph [0082]. | 1-11 |
| A | JP 09-042938 A (OLYMPUS OPTICAL CO., LTD.) 14 February 1997 (1997-02-14)<br>    See paragraph [0022], claims 1-3 and figures 1 and 2. | 1-11 |
| A | KR 10-2005-0119008 A (NANO SYSTEM CO., LTD.) 20 December 2005 (2005-12-20)<br>    See claim 2 and figure 5. | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 November 2024** | **25 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/096084**

| Patent document cited in search report | | | Publication date (day/month/year) | Patent family member(s) | | | Publication date (day/month/year) |
|---|---|---|---|---|---|---|---|
| KR | 10-2014-0032665 | A | 17 March 2014 | KR | 10-1423829 | B1 | 25 July 2014 |
| JP | 2009-211751 | A | 17 September 2009 | | None | | |
| JP | 2018-163092 | A | 18 October 2018 | JP | 2021-182011 | A | 25 November 2021 |
| | | | | JP | 6937482 | B2 | 22 September 2021 |
| JP | 09-042938 | A | 14 February 1997 | | None | | |
| KR | 10-2005-0119008 | A | 20 December 2005 | KR | 10-0641885 | B1 | 02 November 2006 |

Form PCT/ISA/210 (patent family annex) (July 2022)